# FASCICULE DE BREVET EUROPEEN

(11) **EP 0 819 863 B1**
(45) Date de publication et mention de la délivrance du brevet: **09.10.2002**
(21) Numéro de dépôt: 97111606.6
(22) Date de dépôt: 09.07.1997
(51) Int. Cl.: F16D 13/72, F16D 13/74

(54) **Garniture de friction pour un embrayage comportant un réseau de rainures**
Kupplungsreibbelag mit gitternetzförmigen Nuten
Clutch friction lining with grooves

(30) Priorité: 18.07.1996 FR 9609194
(43) Date de publication de la demande: 21.01.1998
(73) Titulaire: VALEO, 75017 Paris (FR)
(72) Inventeur: Menard, Denis, 87000 Limoges (FR); Luquet, Philippe, 87000 Limoges (FR)
(74) Mandataire: Lemaire, Marc

(56) Documents cités:
- EP-A- 0 305 582
- EP-A- 0 550 961
- DE-A- 4 322 231
- GB-A- 669 982
- PATENT ABSTRACTS OF JAPAN vol. 010, no. 171 (M-489), 17 Juin 1986 & JP 61 021425 A (TOYOTA JIDOSHA KK), 30 Janvier 1986,

## Description

L'invention concerne une garniture de friction, notamment pour un embrayage de pontage d'un convertisseur de couple.

L'invention concerne plus particulièrement une garniture de friction comportant une surface de friction annulaire destinée à venir en appui axial contre une surface de réaction, du type dans laquelle la surface de friction comporte un réseau de rainures pour permettre la circulation d'un liquide entre la garniture et la surface de réaction.

Les convertisseurs de couple sont notamment utilisés dans les véhicules automobiles pour établir une liaison entre le moteur thermique du véhicule et la boîte de vitesses, généralement automatique ou à variation continue.

Dans un convertisseur de couple, la transmission de l'effort se fait par circulation d'un fluide entre deux roues à ailettes dont l'une est reliée au moteur et l'autre à la boite de vitesses.

Par construction, les deux roues n'étant pas liées mécaniquement, il subsiste toujours entre les deux une possibilité de glissement relatif qui, dans certains modes de fonctionnement du véhicule, n'est pas utile et est même néfaste au rendement global du dispositif d'entraînement du véhicule.

Aussi, on dispose généralement, en parallèle au convertisseur, un embrayage de pontage qui permet d'assurer une liaison mécanique directe entre le moteur et la boîte de vitesses dans certains modes de fonctionnement correspondant par exemple à des régimes de vitesse quasi-stabilisés.

Jusqu'à présent, les embrayages de pontage étaient utilisés essentiellement selon un mode de fonctionnement en "tout ou rien", c'est-à-dire que l'on n'utilisait que leur état complètement embrayé ou complètement débrayé.

Dans le but d'optimiser le fonctionnement de l'ensemble du dispositif d'entraînement du véhicule, on cherche maintenant à utiliser l'embrayage de pontage dans un plus grand nombre de modes de fonctionnement de la chaîne cinématique et notamment par exemple lors des changements de vitesses.

Par ailleurs, l'embrayage de pontage tend de plus en plus à être utilisé, non plus seulement dans ses états embrayé et débrayé, mais aussi dans un mode dans lequel il glisse, notamment dans le but d'amortir les variations de couple.

L'embrayage de pontage se trouve ainsi de plus en plus sollicité dans des phases qui provoquent un échauffement important, d'une part, des surfaces en contact, et, d'autre part, de l'huile qui permet à la fois la commande de l'embrayage et son refroidissement.

Dans le but d'éviter que cet échauffement supplémentaire ne provoque une usure accélérée des garnitures ou ne provoque une dégradation de l'huile par carbonisation, il a déjà été proposé de disposer sur les garnitures de friction un réseau de rainures permettant une meilleure circulation de l'huile entre la garniture de friction et la surface de réaction. Diverses propositions ont été faites quant à la forme des rainures d'un tel type de réseau, toutes visant à établir une communication entre les circonférences externes et internes de la garniture de friction annulaire.

Toutefois, l'existence de ce réseau de rainures provoque un débit de fuite d'huile même lorsque l'embrayage de pontage est utilisé en mode embrayé et qu'il n'existe plus de différences de vitesse entre l'arbre d'entrée relié au moteur et l'arbre de sortie relié à la boîte de vitesses.

Par ailleurs, la présence des rainures dans la garniture de friction réduit d'autant la surface efficace de contact entre la garniture de friction et la surface de réaction, au détriment du couple transmissible sans glissement par l'embrayage de pontage.

Dans le domaine des embrayages travaillant dans l'huile, il a été proposé dans les documents EP A 0 550 961 et GB A 0669 982, conformes au préambule des revendications 1 et 2, une garniture de friction dans laquelle le réseau de rainures ne débouche pas radialement vers l'extérieur de la garniture.

On peut songer à employer cette caractéristique dans le cadre d'un embrayage de pontage pour convertisseur de couple pour résoudre les problèmes précités.

Néanmoins il est souhaitable de rechercher des formes géométriques de rainures qui permettent d'augmenter le couple transmissible par l'embrayage de pontage tout en limitant l'échauffement de la garniture et de l'huile lorsque l'embrayage de pontage est commandé en glissement.

La présente invention a pour objet de répondre à ce souhait.

Conformément à l'invention ce problème est résolu par les parties caractérisantes des revendications 1 et 2.

Selon d'autres caractéristiques de l'invention :
la profondeur des rainures de la garniture est sensiblement égale à la moitié de l'épaisseur axiale de la garniture ;
la garniture est réalisée en un matériau composite contenant du carbone ;
les rainures radiales ont une forme sensiblement en développante de cercle ;
la garniture coopère avec une autre garniture portée par la surface de réaction.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique illustrant en section axiale un embrayage de pontage pour un convertisseur de couple ;
- les figures 2 et 3 sont des vues agrandies du dispositif de la figure 1 illustrant plus particulièrement le contact entre la garniture de friction et la surface de réaction ;
- la figure 4 est une vue de face d'un premier mode de réalisation d'une garniture de friction annulaire conforme aux enseignements de l'invention ;
- la figure 5 est une vue en section selon la ligne 5-5 de la figure 4 ;
- les figures 6 et 7 sont des vues similaires aux figures 4 et 5, illustrant un deuxième mode de réalisation de l'invention.

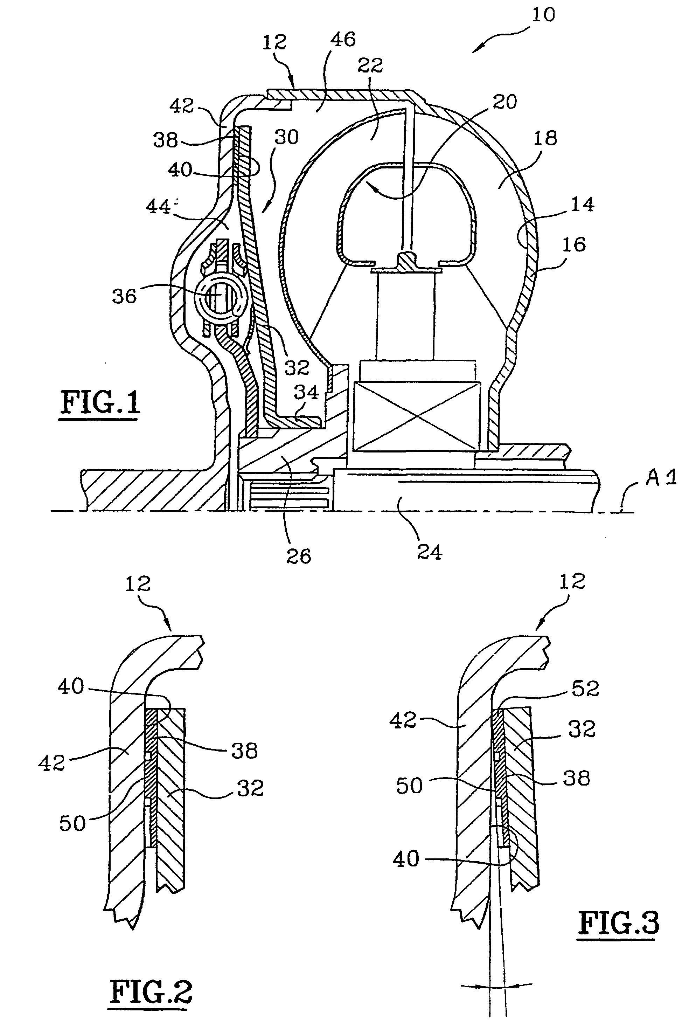

On a représenté sur la figure 1 un convertisseur de couple 10 destiné par exemple à être interposé entre un moteur thermique et une boîte de vitesses automatique d'un véhicule automobile.

De manière connue, le convertisseur 10 comporte un carter externe sensiblement cylindrique 12 d'axe A1 qui est relié à l'arbre de sortie (non représenté) du moteur thermique et qui est ainsi entraîné en rotation autour de son axe A1. Le carter 12 porte, sur une face interne 14 d'une paroi sensiblement transversale 16 agencée du côté opposé au moteur, une série d'aubes 18 formant une pompe à fluide. A l'intérieur du carter 12, une roue de turbine 20 est munie d'aubes 22 et est montée à rotation autour de l'axe A1 par rapport au carter 12. La roue de turbine 20 est susceptible d'entraîner en rotation un arbre de sortie 24 du convertisseur de couple 10 qui est relié à la boîte de vitesses. La roue de turbine 20 est montée sur une douille centrale 26 qui est liée, par exemple grâce à des cannelures, à l'arbre de sortie 24.

Le carter du convertisseur contient de l'huile qui est susceptible de réaliser un couplage entre les aubes 18 de la pompe à fluide et la roue de turbine 20.

De manière connue, un embrayage de pontage 30 est agencé à l'intérieur du carter 12 du convertisseur de couple 10 pour lier en rotation l'arbre de sortie 24 du convertisseur 10 au carter 12 lorsqu'il est en position embrayé. L'embrayage de pontage 30 permet ainsi de supprimer le glissement relatif en rotation autour de l'axe A1 entre le carter 12 formant pompe et la roue de turbine 20 qui entraîne l'arbre 24.

L'embrayage de pontage 30 comporte un plateau mobile 32 sensiblement annulaire qui est monté par un bord périphérique interne 34 à coulissement axial sur la douille 26. Le plateau mobile 32 est par ailleurs lié en rotation à la douille 26 par l'intermédiaire d'un dispositif amortisseur de torsion 36 susceptible de filtrer les variations de couple qui interviennent lors des phases d'embrayage et de débrayage.

Le plateau mobile 30 comporte, à sa périphérie externe, une garniture de friction 38 annulaire qui est destinée à venir en appui axial contre une surface de réaction correspondante 40 formée sur la face interne d'une paroi transversale 42 du carter 12 qui est agencée axialement du côté du moteur thermique.

La garniture 38 est par exemple réalisée en un matériau composite comportant une résine dans laquelle sont noyés des éléments de renfort qui peuvent être des fibres cellulosiques ou des fibres en carbone.

En variante la garniture 38 est en un matériau composite carbone/carbone.

Le plateau mobile 32 délimite ainsi à l'intérieur du carter 12 deux chambres 44, 46 entre lesquelles il forme un piston de telle sorte que, en fonction de la pression d'huile régnant dans chacune de ces chambres, le plateau mobile 32 est sollicité axialement dans l'une ou l'autre des directions. Ainsi, lorsque la chambre 44, qui est délimitée entre le plateau mobile 32 et la paroi 42 qui porte la surface de réaction, est alimentée en fluide sous pression, le plateau mobile 32 est repoussé axialement de manière à provoquer le débrayage de l'embrayage de pontage 30.

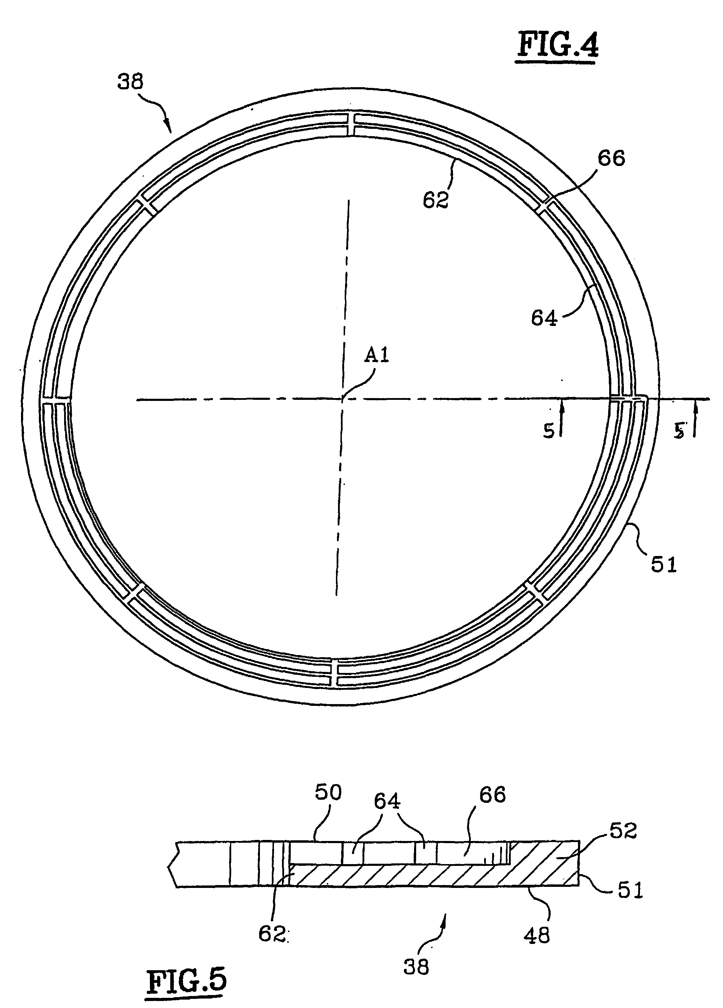

Au contraire, lorsque la chambre 46 délimitée à l'intérieur du carter 12 par le plateau mobile 32, dans laquelle est par ailleurs agencé le convertisseur couple, est alimentée en fluide sous pression, le plateau mobile 32 est déplacé axialement dans le sens de l'embrayage. On a représenté sur les figures 4 à 7 deux modes de réalisation d'une garniture de friction 38 conforme aux enseignements de l'invention.

Les garnitures de friction 38 se présentent sous la forme de flasques annulaires d'axe A1 dont une face transversale 48 est destinée à permettre leur fixation, par exemple sur le plateau mobile 32, et dont la face transversale annulaire opposée 50 est destinée à frotter contre la surface de réaction 40 du carter 12. Comme on peut le voir sur ces figures, la surface de friction 50 est munie d'un réseau de rainures qui sont creusées dans la surface transversale 50 pour permettre une circulation d'huile entre la garniture de friction 38 et la surface de réaction 40 afin notamment d'en assurer le refroidissement.

Selon une caractéristique, le réseau de rainures ne débouche pas radialement vers l'extérieur de la garniture 38.

Ainsi, la garniture 38 comporte un anneau périphérique 52 qui est plein et dont la surface transversale qui forme la surface de friction 50 est continue sur toute la périphérie du disque.

Au contraire, le réseau de rainures comporte des rainures qui débouchent radialement vers l'intérieur dans le bord périphérique interne 62 de la garniture annulaire 38.

Les rainures peuvent être obtenues notamment par moulage ou usinage.

On a représenté sur les figures 2 et 3, de manière schématique, le contact de la garniture 38 contre la surface de réaction 40.

Du fait du mode d'actionnement de l'embrayage de pontage 30, qui est sollicité vers sa position d'embrayage par un excès de pression dans la chambre 46 par rapport à la chambre 44, le plateau mobile 42 tend à se déformer, du fait notamment de la résistance du contact entre la douille 26 et le plateau mobile 32 au niveau de son bord radial interne 34.

De la sorte, et comme on peut le voir plus particulièrement sur la figure 3, le plateau mobile 32 tend à se déformer de telle manière que la garniture 38 arrive au contact de la surface de réaction 40 tout d'abord par son bord périphérique externe 51.

Ensuite, sous l'effet de la pression, le contact entre la garniture 38 et la surface de réaction 40 s'établit sur toute la surface de la garniture 38 ainsi que cela est représenté sur la figure 2.

Toutefois, dès l'arrivée en contact de la garniture 38, l'utilisation d'une garniture munie d'un réseau de rainures non débouchant vers l'extérieur, conformément à une caractéristique, permet que l'anneau périphérique externe 52 de la garniture 38 forme un joint d'étanchéité qui tend à interrompre tout débit d'huile entre la surface de friction 50 de la garniture 38 et la surface de réaction 40, ce qui est favorable à une bonne transmission du couple.

Toutefois, si l'embrayage de pontage 30 est commandé de manière à patiner, c'est-à-dire si l'excès de pression dans la chambre 46 du carter 12 est modéré, la pression de contact entre les surfaces de réaction 40 et de friction 50 est réduite de sorte qu'un léger débit d'huile pourra circuler entre ces deux surfaces de manière à provoquer leur refroidissement.

Ce débit est favorisé par la présence des rainures qui sont agencées sur la portion radiale interne de la garniture 38 et qui permettent de limiter la distance radiale sur laquelle l'anneau 52 tend à provoquer l'étanchéité.

On a représenté sur les figures 4 à 7 deux modes de réalisation du réseau de rainures sur la garniture 38.

Dans le premier mode de réalisation qui est représenté sur les figures 4 et 5, la garniture 38 comporte une rainure spirale 64 et une série de rainures radiales 66 qui débouchent dans le bord interne 62 de la garniture 38 et recoupent en plusieurs points la rainure spirale 64.

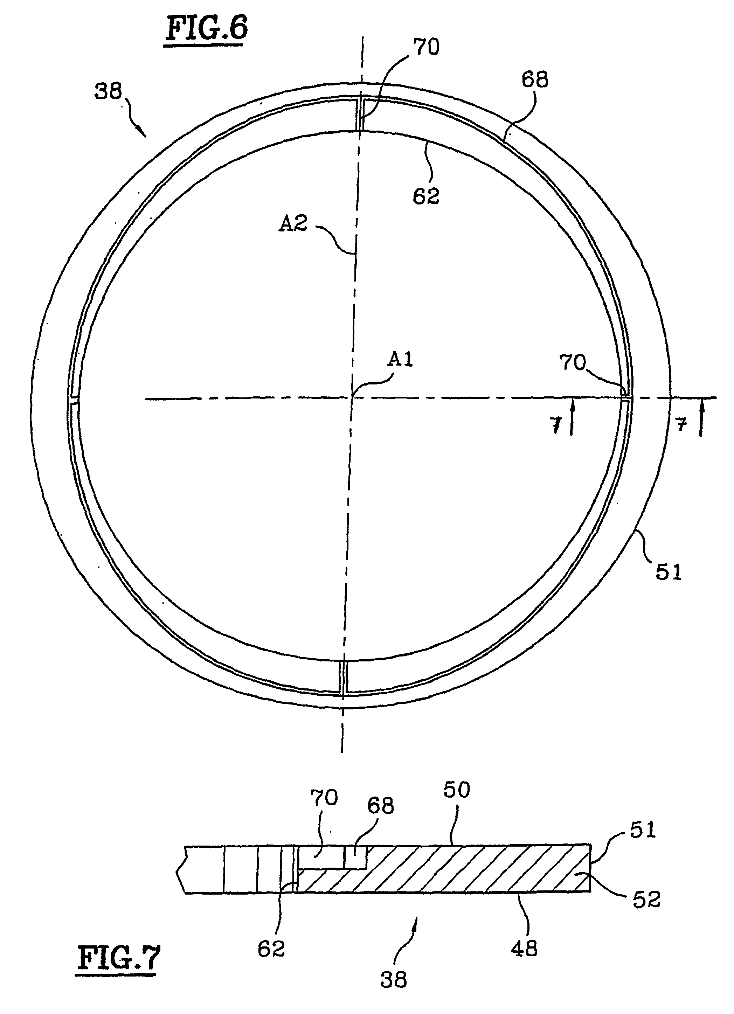

Dans le deuxième exemple de réalisation qui est représenté sur les figures 6 et 7, la garniture 38 comporte une rainure unique 68 qui est elliptique, centrée sur l'axe A1 de la garniture 38, mais dont le grand axe A2 est de dimension inférieure au diamètre externe de la garniture. Des rainures radiales 70 permettent d'assurer la communication entre la rainure elliptique 68 et le bord interne 62 de la garniture 38.

Comme on peut le voir plus particulièrement sur les figures 5 et 7, la profondeur des rainures 64, 66, 68, 70 est sensiblement égale à la moitié de l'épaisseur axiale de la garniture 38.

Ces exemples de réalisation de l'invention montrent que les rainures peuvent prendre des formes très variées et que l'invention n'est pas limitée aux formes décrites ci-dessus. Ainsi, on peut par exemple prévoir de réaliser des rainures radiales dont la forme est sensiblement en développante de cercle.

Les différentes géométries proposées pour le réseau de rainures de la garniture de friction 38 permettent d'augmenter le couple transmissible par l'embrayage de pontage 30 tout en limitant l'échauffement de la garniture 38 et de l'huile lorsque l'embrayage 30 est commandé en glissement.

L'invention n'est pas limitée à l'utilisation d'une seule garniture de friction 50. Celle-ci peut en effet coopérer avec une autre garniture portée par la surface de réaction.

## Revendications

1. Garniture de friction comportant une surface de friction annulaire (50) destinée à venir en appui axial contre une surface de réaction (40), du type dans laquelle, d'une part, la surface de friction (50) comporte un réseau de rainures pour permettre la circulation d'un liquide entre la garniture (38) et la surface de réaction (40), et, d'autre part, le réseau de rainures ne débouche pas radialement vers l'extérieur (51) de la garniture (38), **caractérisée en ce qu'**elle est destinée à être agencée dans un embrayage de pontage (30) d'un convertisseur de couple (10), et **en ce qu'**elle comporte une rainure spirale (64) et une série de rainures radiales (66) qui débouchent dans le bord interne de la garniture (38) et recoupent en plusieurs points la rainure spirale (64).

2. Garniture de friction comportant une surface de friction annulaire (50) destinée à venir en appui axial contre une surface de réaction (40), du type dans laquelle, d'une part, la surface de friction (50) comporte un réseau de rainures pour permettre la circulation d'un liquide entre la garniture (38) et la surface de réaction (40), et, d'autre part, le réseau de rainures ne débouche pas radialement vers l'extérieur (51) de la garniture (38), **caractérisée en ce qu'**elle est destinée à être agencée dans un embrayage de pontage (30) d'un convertisseur de couple (10), **en ce qu'**elle comporte une rainure unique (68) qui est elliptique centrée sur l'axe A1 de la garniture (38), mais dont le grand axe A2 est de dimension inférieure au diamètre externe de la garniture, et **en ce que** des rainures radiales (70) permettent d'assurer la communication entre la rainure elliptique (68) et le bord interne (62) de la garniture (38).

3. Garniture de friction selon l'une quelconque des revendications précédentes, **caractérisée en ce que** la profondeur des rainures (64, 66, 68, 70) de la garniture est sensiblement égale à la moitié de l'épaisseur axiale de la garniture (38).

4. Garniture de friction selon l'une quelconque des revendications précédentes, **caractérisée en ce qu'**elle est réalisée en un matériau composite comportant du carbone.

5. Garniture de friction selon l'une quelconque des revendications précédentes, **caractérisée en ce que** les rainures radiales (66, 70) ont une forme sensiblement en développante de cercle.

6. Garniture de friction selon l'une quelconque des revendications précédentes, **caractérisée en ce qu'**elle est apte à coopérer avec une autre garniture portée par la surface de réaction (40).

## Patentansprüche

1. Reibbelag mit einer ringförmigen Reibfläche (50), die dazu bestimmt ist, an einer Gegenanpreßfläche (40) zur axialen Anlage zu kommen, wobei einerseits die Reibfläche (50) ein Gitternetz aus Nuten umfaßt, um die Zirkulation einer Flüssigkeit zwischen dem Reibbelag (38) und der Gegenanpreßfläche (40) zu ermöglichen, und wobei andererseits das Gitternetz aus Nuten nicht radial nach außen (51) am Reibbelag (38) mündet,
**dadurch gekennzeichnet,**
**daß** er zur Anordnung in einer Überbrückungskupplung (30) eines Drehmomentwandlers (10) bestimmt ist und daß er eine Spiralnut (64) und eine Reihe von radialen Nuten (66) umfaßt, die im inneren Rand des Reibbelags (38) münden und die Spiralnut (64) an mehreren Stellen schneiden.

2. Reibbelag mit einer ringförmigen Reibfläche (50), die dazu bestimmt ist, an einer Gegenanpreßfläche (40) zur axialen Anlage zu kommen, wobei einerseits die Reibfläche (50) ein Gitternetz aus Nuten umfaßt, um die Zirkulation einer Flüssigkeit zwischen dem Reibbelag (38) und der Gegenanpreßfläche (40) zu ermöglichen, und wobei andererseits das Gitternetz aus Nuten nicht radial nach außen (51) am Reibbelag (38) mündet,
**dadurch gekennzeichnet,**
**daß** er zur Anordnung in einer Überbrückungskupplung (30) eines Drehmomentwandlers (10) bestimmt ist,
**daß** er eine einzige Nut (68) umfaßt, die elliptisch auf die Achse A1 des Reibbelags (38) zentriert ist, deren größere Achse A2 jedoch eine kleinere Abmessung als der Außendurchmesser des Reibbelags aufweist,
und **daß** radiale Nuten (70) es ermöglichen, die Verbindung zwischen der elliptischen Nut (68) und dem inneren Rand (62) des Reibbelags (38) herzustellen.

3. Reibbelag nach einem der vorangehenden Ansprüche,
**dadurch gekennzeichnet, daß** die Tiefe der Nuten (64, 66, 68, 70) des Reibbelags in etwa gleich der Hälfte der axialen Dicke des Reibbelags (38) ist.

4. Reibbelag nach einem der vorangehenden Ansprüche,
**dadurch gekennzeichnet, daß** er aus einem Kohlenstoff enthaltenden Verbundwerkstoff ausgeführt ist.

5. Reibbelag nach einem der vorangehenden Ansprüche,
**dadurch gekennzeichnet, daß** die radialen Nuten (66, 70) in etwa die Form einer Kreisevolvente haben.

6. Reibbelag nach einem der vorangehenden Ansprüche,
**dadurch gekennzeichnet, daß** er mit einem an der Gegenanpreßfläche (40) angebrachten anderen Reibbelag zusammenwirken kann.

## Claims

1. A friction liner having an annular friction surface (50) arranged to come into axial engagement against a reaction surface (40), of the type in which, firstly, the friction surface (50) has a network of grooves to permit flow of a liquid between the liner (38) and the reaction surface (40), and, secondly, the network of grooves is not open radially on the outside (51) of the liner (38), **characterised in that** it is arranged to be fitted in a bridging clutch (30) of a torque converter (10), and **in that** it includes a spiral groove (64) and a set of radial grooves (66) which are open in the inner edge of the liner (38) and which intersect the spiral groove (64) at several points.

2. A friction liner having an annular friction surface (50) arranged to come into axial engagement against a reaction surface (40), of the type in which, firstly, the friction surface (50) has a network of grooves to permit flow of a liquid between the liner (38) and the reaction surface (40), and, secondly, the network of grooves is not open radially on the outside (51) of the liner (38), **characterised in that** it is arranged to be fitted in a bridging clutch (30) of a torque converter (10), **in that** it has a single groove (68) which is elliptical and centred on the axis (A1) of the liner (38), but of which the major axis (A2) is smaller than the outer diameter of the liner, and **in that** radial grooves (70) provide communication between the elliptical groove (68) and the internal edge (62) of the liner (38).

3. A friction liner according to either one of the preceding Claims, **characterised in that** the depth of the grooves (64, 66, 68, 70) of the liner is substantially equal to one half of the axial thickness of the liner (38).

4. A friction liner according to any one of the preceding Claims, **characterised in that** it is made of a composite material containing carbon.

5. A friction liner according to any one of the preceding Claims, **characterised in that** the radial grooves (66, 70) have a form which is substantially a development of a circle.

6. A friction liner according to any one of the preceding Claims, **characterised in that** it is adapted to cooperate with another liner carried by the reaction surface (40).
